# EUROPÄISCHE PATENTANMELDUNG

(11) **EP 0 780 346 A1**
(43) Veröffentlichungstag der Anmeldung: **25.06.1997**
(21) Anmeldenummer: 96119670.6
(22) Anmeldetag: 07.12.1996
(51) Int. Cl.: C03C 17/23, C03C 17/245, C03C 17/25

(54) **Verfahren zur pyrolytischen Beschichtung von Glas und Glaskeramik**

(30) Priorität: 21.12.1995 DE 19547848
(71) Anmelder: Th. Goldschmidt AG, 45127 Essen (DE)
(72) Erfinder: Krohm, Hans-Günter, 46348 Raesfeld (DE); Vallerien, Sven-Uwe, Dr., 45239 Essen (DE)

(57) **Zusammenfassung**

Verfahren zur pyrolytischen Erzeugung von transmissionsmindernden Schichten aus antimonoxiddotiertem Zinnoxid auf Glas und Glaskeramik, wobei die antimonoxiddotierte Zinnoxidschicht Zinn und Antimon im Molverhältnis 1 : 0,2 bis 1 : 0,5 enthält.

## Beschreibung

Die Erfindung betrifft ein Verfahren zur Herstellung von pyrolytischen Schichten auf Glas und Glaskeramik unter Verringerung der optischen Transmission.

Glas, welches eine optische Transmission im sichtbaren Bereich unter 10 % aufweist, findet vielfältige Verwendung als Sonnenschutzverglasung, beispielsweise bei der Automobilverglasung, insbesondere bei Glasschiebedächern ("Sonnendach").

Technisch wird diese Anforderung bislang gelöst durch die Verwendung von polymeren Dekorfolien und/oder keramischen Siebdrucken, die über ein lochblendenartiges Muster die optische Transmission erniedrigen (JP 88-272039). Technisch kann dieses Verfahren jedoch nicht zufriedenstellen, da der Produktionsprozeß bei laminierten Folien aufwendig ist und es bei einseitig auf die Glasoberfläche aufgeklebten Folien im Laufe der Zeit zu Ablösungen kommt, die das Erscheinungsbild und auch die Funktion erheblich verschlechtern.

Es ist dem Fachmann weiterhin geläufig, daß in Masse gefärbtes Glas, welches eine optische Transmission unterhalb von 10 % aufweist, nur sehr aufwendig und nicht mittels konventioneller Methoden herzustellen ist, da die Schmelze einfriert. Mit einer technisch sehr aufwendigen Elektroschmelze können derartige Gläser erschmolzen werden. Dieser Glastyp wird kommerziell angeboten, er ist jedoch nur in kleinen Mengen zu herstellungsbedingt hohen Preisen erhältlich. Damit ist der Einsatz im Automobilsektor erheblich eingeschränkt.

Die Beschichtung mit Cobalt-, Chrom- oder auch Eisenacetylacetonaten ist Stand der Technik (z. B. DE-A-20 52 069, US-A-4 234 331). Diese Schichten erreichen jedoch keine Verringerung der optischen Transmission im sichtbaren Wellenlängenbereich auf Werte unter 20 %. Auch in Masse gefärbtes Glas unter Verwendung von Cobalt- und Chromoxiden erreicht nicht die geforderte Transmissionserniedrigung(z. B. EP-A-0 402 685). In der DE-A-39 40 660 werden Werte der optischen Transmission von 58 % genannt. In der DE-A-23 61 744 wird die Lichttransmission mit 40 % angegeben.

Sputterbeschichtungen erreichen ebenfalls keine ausreichende Transmissionserniedrigung (EP-A-0 258 635). Zudem ist das Sputterverfahren nicht Online-fähig und benötigt einen wesentlich höheren Energiebedarf, da das Glas nachträglich erhitzt und ins Hochvakuum gebracht werden muß.

Es bestand daher ein Bedarf nach einem Verfahren, welches in einfacher Weise die Erzeugung weitestgehend im sichtbaren Lichtwellenlängenbereich absorbierender Schichten ermöglicht.

Ein solches Verfahren wird durch die Erfindung bereitgestellt.

Gegenstand der Erfindung ist somit ein Verfahren zur Erzeugung von transmissionsmindernden Schichten auf Glas und Glaskeramik, indem man auf die zu beschichtende heiße Oberfläche pyrolytisch eine Schicht aus antimonoxiddotiertem Zinnoxid aufbringt, die Zinn und Antimon im Molverhältnis 1 : 0,2 bis 1 : 0,5 enthält.

Vorzugsweise verwendet man hierzu eine Lösung von Zinn- und Antimonverbindungen in organischen Lösungsmitteln und/oder Wasser, die man auf die zu beschichtende heiße Oberfläche aufbringt und daraus pyrolytisch eine Schicht aus Oxiden dieser Elemente erzeugt.

Bevorzugt wird dabei die Schicht in einer Dicke von 50 nm bis 1 500 nm aufgebracht.

Die so vergütete Glasoberfläche weist eine hohe Lichtabsorption im Wellenlängenbereich zwischen 0,300 µm und 0,700 µm auf. Die Transmission liegt dabei unterhalb von 10 %. Diese technischen Funktionswerte der so erzielten antimonoxiddotierten Zinnoxidschichten sind also konventionell aufgebrachten Beschichtungen weit überlegen.

Die erfindungsgemäß erzielten Schichten erscheinen bei Tageslicht auf farbneutralem Floatglas mit einer dunklen, grau-violetten Farbe.

Durch die Tatsache, daß bei dem erfindungsgemäßen Beschichtungsverfahren von technisch ausgereiften Auftragsverfahren Gebrauch gemacht werden kann, werden gleichmäßige, einwandfreie Schichten erzielt.

Diese Auftragsverfahren sind von der Beschichtung von Substraten mit Zinnoxiden bekannt; dabei wird sowohl der elektrische Widerstand der so beschichteten Oberfläche herabgesetzt als auch die Infrarotreflexion erhöht. Technisch werden diese physikalischen Eigenschaften genutzt für Wärmeschutzverglasungen oder auch zum flächigen Beheizen von Scheiben, z. B. Autoscheiben, Kühlthekenverglasungen.

Zur Erzeugung derartiger Schichten werden geeignete Zinnverbindungen (Basisverbindungen), vorzugsweise gleichzeitig mit einem Dotierungsmittel, in Kontakt mit der auf 400 bis 800 °C erhitzten Glasoberfläche gebracht. Die Basiszinnverbindung bildet eine zusammenhängende Zinn(IV)oxidschicht auf der Oberfläche des Glases oder der Glaskeramik aus. Insbesondere Fluor als Dotierungsmittel erhöht die elektrische Leitfähigkeit und bewirkt die hohe Infrarotreflexion. Das Aufsprühen geeigneter zinnhaltiger Lösungen ist zur Aufbringung der Zinnoxidschichten auf die Oberflächen besonders einfach (siehe z. B. DE-A-39 15 232 und DE-A-37 35 574).

Ein weiteres bekanntes Verfahren zur pyrolytischen Beschichtung von Glasoberflächen ist der CVD-Prozeß (Chemical Vapour Deposition). Dabei werden die Ausgangsverbindungen in Dampfform mit der Glasoberfläche kontaktiert (siehe z. B. DE-A-23 61 702).

Weiterhin ist es bewährte Technik, die Ausgangsverbindungen als Pulver auf das zu beschichtende Substrat aufzutragen. Als Beispiel für den apparativen Aufbau zum technischen Pulverauftrag wird auf die EP-A-0 095 765 verwiesen.

Durch die Tatsache, daß bei dem erfindungsgemäßen Beschichtungsverfahren von technisch ausgereiften Auftragsverfahren Gebrauch gemacht werden kann, werden gleichmäßige einwandfreie Schichten erzielt.

Gegenstand der Erfindung ist ferner eine Zubereitung zur pyrolytischen Aufbringung einer transmissionsmindernden Schicht auf Glas und Glaskeramik, welche aus
- a) 97 bis 70 Gew.-Teilen: einer oder mehrerer Zinnverbindungen und
- b) 3 bis 30 Gew.-Teilen: einer oder mehrerer Antimonverbindungen
besteht und 0 bis 60 Gew.-%, bezogen auf a) + b), eines organischen Lösungsmittels oder Lösungsmittelgemisches und/oder Wasser enthält.

Geeignete Zinn- und Antimonverbindungen sind insbesondere solche, die in Wasser oder organischen Lösungsmitteln löslich oder problemlos zu verdampfen sind. Für die Pulverauftragung eignen sich insbesondere solche, die gut in eine feinteilige Form zu bringen sind und nicht zum Verklumpen neigen.

Als zinnhaltige Verbindungen sind beispielsweise geeignet: Zinntetrachlorid, Alkylzinntrichlorid (z. B. Monobutylzinnchlorid), Dialkylzinndichlorid (z. B. Dibutylzinndichlorid), Monoalkylzinnoxid (z. B. Monobutylzinnoxid), Dialkylzinnoxid (z. B. Dibutylzinnoxid), Monoalkylzinntricarboxylate (Monobutylzinnacetat), Dialkylzinndicarboxylate (z. B. Dibutylzinnacetat), Trialkylzinncarboxylat (Tributylzinnacetat), Dichlorzinndicarboxylate (z. B. Dichlorzinndiacetat), wäßrige, alkoholische oder ketonische Zinn(IV)säuresole oder Mischungen o.g. zinnhaltiger Verbindungen.

Als Antimonverbindungen sind beispielsweise geeignet: Antimon(III)-chlorid, Antimon(V)-chlorid, Antimon(III)-oxid, Antimon(IV)-oxid, Antimon(V)-oxid Antimon(III)-fluorid, Antimon(V)-fluorid, Antimonoxichloride, Hexachloroantimonsäure, Antimonalkoholate, Antimonacetylacetonate.

Als organische Lösungsmittel kommen in Frage:
Alkohole (Methanol, Ethanol, Isopropanol, Butanol), Ketone (Aceton, Methylethylketon, Methylisobutylketon), Ester (Essigsäureethylester, Essigsäurebutylester) und/oder Wasser.

Bei der Auswahl der Verbindungen ist die Verträglichkeit der Komponenten untereinander zu beachten. Die technischen Bedingungen, wie z. B. Sprühapparatur oder Aufdampfapparatur, Glastemperatur oder Produktionsgeschwindigkeit, bestimmen die Art und Konzentration der eingesetzten Stoffe in dieser Beschichtungsformulierung.

Die Zubereitung der Beschichtungsformulierung erfolgt in einfacher Weise durch Mischung in einem geeigneten Rührgefäß, wobei darauf zu achten ist, daß sich die Beschichtungsformulierung nicht zu sehr erhitzt und, im Fall der Lösungen, keine Ausfällungen auftreten. Idealerweise sollte die Temperatur deutlich unterhalb des Siedepunktes der Komponenten gehalten werden.

Die Anteile der Komponenten können, wie angegeben, in einem weiten Bereich schwanken. Die Bestandteile müssen jedoch jeweils in ausreichendem Maße enthalten sein, um den Ansprüchen einer technischen Applikation, wie z. B. Dosierbarkeit und Versprühbarkeit, zu genügen.

Die Auswahl richtet sich dabei nach der Art und Zusammensetzung des zu beschichtenden Substrats und den technischen Beschichtungsbedingungen.

Geeignete Lösungen sind beispielsweise:
- 35,3 %: Zinn(IV)-chlorid
- 12,0 %: Antimon(III)-chlorid
- 52,7 %: Ethanol
- 43,25 %: Butylzinntrichlorid
- 12,0 %: Antimon(III)-chlorid
- 44,75 %: Ethanol
- 60,0 %: Butylzinntrichlorid
- 25,0 %: Antimon(V)-chlorid
- 5,0 %: Ethylacetat
- 10,0 %: Ethanol
- 54,5 %: Dichlorzinndiacetat
- 22,0 %: Antimon(V)-chlorid
- 23,5 %: Ethylacetat
- 43,25%: Butylzinntrichlorid
- 12,0 %: Antimon(III)-chlorid
- 44,75%: Ethanol
- 53,8 %: Dibutylzinndichlorid
- 15,9 %: Antimon(III)-chlorid
- 30,3 %: Butanol
- 80%: Butylzinntrichlorid
- 20%: Antimon(III)-chlorid
- 80 %: Butylzinntrichlorid
- 20 %: Antimon(III)-chlorid

Zur Durchführung des erfindungsgemäßen Beschichtungsverfahrens wird die erfindungsgemäße Zubereitung im Sprühzerstäubungsverfahren, CVD-Verfahren (Chemical Vapour Deposition) oder Pulverbeschichtungsverfahren auf die zuvor erhitzten Oberflächen aufgebracht. Das Substrat soll dabei eine Temperatur von 400 bis 800 °C haben, jedoch sollte die Temperatur unterhalb seiner jeweiligen Schmelz- bzw. Erweichungstemperatur liegen. Dabei entsteht auf der heißen Oberfläche durch Oxidation und thermische Zersetzung eine dünne Schicht aus Metalloxiden der eingesetzten Metallkomponenten. Das Lösungsmittel verdampft oder wird zersetzt.

Durch Pyrolyse wird somit auf dieser Oberfläche eine Zinnoxid/Antimonoxid-Funktionsschicht erzeugt. Die Dicke dieser Beschichtung kann zwischen 0,05 µm und 1,5 µm durch die Mengendosierung der aufgebrachten Lösungen/Mischungen/Pulver variiert werden. Das Molverhältnis von Zinn zu Antimon bedingt die Transmissionsminderung bei einer gegebenen Schichtdicke. Zur Erzielung einer möglichst geringen optischen Transmission hat sich ein Molverhältnis von 1 : 0,2 bis 1 : 0,5, vorzugsweise 1 : 0,4 in der Beschichtungsmischung als vorteilhaft erwiesen.

Zur weiteren Erläuterung der Erfindung sind die nachfolgenden Beispiele aufgeführt.

### Beispiel 1

- 43,25 %: Butylzinntrichlorid
- 8 %: Antimon(III)-chlorid
- 48,75 %: Ethanol

Die Lösungen werden auf eine Flachglasscheibe (160 mm x 180 mm x 6 mm), die zuvor 5 Minuten lang bei einer Ofentemperatur von ca. 700 °C aufgeheizt und mittels einer pneumatischen Hub-Drehvorrichtung in eine Sprühkabine mit Absaugung eingebracht wurde, aufgesprüht.

Die auf diese Weise mit einer Walther-Handsprühpistole (Düsendurchmesser 0,8 mm, Sprühdruck 1,5 bar, Sprühabstand ca. 35 cm, Sprühmenge 8 ml) beschichtete Glasplatte weist bei o.g. Sprühmengen folgende Werte nach dem Tempern, Entspannen und Erkalten auf (Gardener Hazemeter HAZE-GARD Plus und Beckman Instruments DU 60):
Optische Transmission: 8,8 %

### Beispiel 2

- 34,3 %: Butylzinntrichlorid
- 14 %: Antimon(III)-chlorid
- 51,7 %: Ethanol
Transmission (HAZE-GARD Plus) : 9,2 %

Die so beschichteten Scheiben können problemlos getempert und gebogen werden. Erst bei Biegeradien, die kleiner als 1 m sind, können erstmals unter dem Lichtmikroskop feinste Mikrorisse erkannt werden. Technisch sind jedoch Biegeradien in der Größenordnung von etwa 5 m üblich.

### Beispiel 3 (CVD-Technik)

In einen 250-ml-Vierhalskolben wird die folgende Lösung eingebracht:
- 24,1 %: Antimon(III)-chlorid, gelöst in
- 75,9 %: Butylzinntrichlorid.

Mit Hilfe einer Gasstromheizung wird getrocknete Preßluft über einen Hals in den Kolben und über die Oberfläche der Flüssigkeit geführt. Die Temperatur in der Gasphase des Kolbeninnenraums beträgt ca. 140 °C. Die Verdampfungsrate im Kolben beträgt ungefähr 71 g/h. Über einen weiteren Kolbenhals wird mittels eines Glasrohrs der mit den verdampften Komponenten angereicherte Gasstrom auf die Oberfläche einer zuvor in einem Muffelofen auf 690 °C erhitzten Glasscheibe geführt.

Eine derartig beschichtete Glasscheibe weist die folgenden Funktionswerte auf:
Transmission (HAZE-GARD Plus): 9,2 %

### Beispiel 4 (direkter Pulverauftrag)

Mittels einer Vibrationszuteilrinne (Modell DR1000 der Fa. Retsch) wird eine Mischung von
69 Teilen Monobutylzinnoxid und
31 Teilen Antimon(III)-chlorid
auf die auf 650 °C erhitzte Glasoberfläche aufgetragen. Es bildet sich ein zusammenhängender Metalloxidfilm. Dieser Vorgang wird anschließend noch dreimal wiederholt (Heizzeit 5 min, Aufpulvern). Nach dem Tempern und Entspannen weist die derart beschichtete Scheibe die folgenden Funktionswerte auf:
Transmission (HAZE-GARD Plus): 9,5 %

## Patentansprüche

1. Verfahren zur pyrolytischen Erzeugung einer transmissionsmindernden Schicht aus antimonoxiddotiertem Zinnoxid auf Glas und Glaskeramik, dadurch gekennzeichnet, daß diese Schicht Zinn und Antimon im Molverhältnis 1 : 0,2 bis 1 : 0,5 enthält.

2. Verfahren gemäß Anspruch 1, dadurch gekennzeichnet, daß die Schicht in einer Dicke von 50 nm bis 1 500 nm aufgebracht wird.

3. Verfahren gemäß den Ansprüchen 1 und 2, dadurch gekennzeichnet, daß man hierzu eine Lösung von Zinn- und Antimonverbindungen in organischen Lösungsmitteln und/oder Wasser verwendet.

4. Zubereitung zur pyrolytischen Aufbringung einer transmissionsmindernden Schicht auf Glas und Glaskeramik, welche aus
a) 97 bis 70 Gew.-Teilen einer oder mehrerer Zinnverbindungen und
b) 3 bis 30 Gew.-Teilen einer oder mehrerer Antimonverbindungen
besteht und mit 0 bis 60 Gew.-%, bezogen auf a) + b), eines organischen Lösungsmittels oder Lösungsmittelgemisches und/oder Wasser gemischt wird.
